# EUROPEAN PATENT APPLICATION

(11) **EP 4 336 945 A1**
(43) Date of publication of application: **13.03.2024**
(21) Application number: 22806643.7
(22) Date of filing: 07.05.2022
(51) Int. Cl.: H04W 74/08

(54) **RANDOM ACCESS PROCESSING METHOD AND APPARATUS, AND TERMINAL**

(30) Priority: 08.05.2021 CN 202110502356
(71) Applicant: Vivo Mobile Communication Co., Ltd., Dongguan, Guangdong 523863 (CN)
(72) Inventor: PU, Wenjuan, Dongguan, Guangdong 523863 (CN); YANG, Xiaodong, Dongguan, Guangdong 523863 (CN)
(74) Representative: Lavoix
(86) International application number: PCT/CN2022/091434
(87) International publication number: WO 2022/237677

(57) **Abstract**

This application discloses a processing method and apparatus for random access and a terminal, pertaining to the field of communication technologies. The method in embodiments of this application includes: a terminal performs a first operation in a case that a first condition is satisfied, during a process of performing a first random access on a secondary cell group SCG by the terminal, where the first condition includes at least one of the following: the terminal initiates a second random access, the terminal receives first configuration information, and the terminal receives an SCG deactivation command, where the first configuration information is used for triggering bandwidth part BWP switching and/or a third random access; where the first operation is one of the following: continuing performing the first random access; and stopping performing the first random access.

## Description

### CROSS-REFERENCE TO RELATED APPLICATIONS

This application claims priority to Chinese Patent Application No. 202110502356.5, filed in China on May 08, 2021, which is incorporated herein by reference in its entirety.

### TECHNICAL FIELD

This application pertains to the field of communication technologies and specifically relates to a processing method and apparatus for random access and a terminal.

### BACKGROUND

Dual connectivity (Dual Connectivity, DC) refers to providing a terminal with resources from two network nodes (access network elements). One of these network nodes is called the master node (Master Node, MN) and the other the secondary node (Secondary Node, SN). At each network node, carrier aggregation (Carrier Aggregation, CA) is used to allocate to terminals a series of serving cells, also known as a cell group, controlled by that node. The cell group controlled by the master node is called a master cell group (Master Cell Group, MCG), while the cell group controlled by the secondary node is called a secondary cell group (Secondary Cell Group, SCG). Each cell group includes one special cell (Special Cell, SpCell) and a series of secondary cells (Secondary Cell, Scell). The special cell in the MCG is called a primary cell (Primary Cell, PCell), and the special cell in the SCG is called the primary secondary cell (Primary Secondary Cell, PSCell). In a cell group, the SpCell uses the primary carrier, and other secondary cells use secondary carriers.

A state of SCG being suspended (suspended) is introduced, where the network can temporarily suspend instead of deleting the SCG in a case that the terminal has low or no data transmission on the SCG for a long period of time. Suspending the SCG allows the terminal to operate in a more power-efficient manner for an extended period, and the SCG can be quickly restored in case of a high data demand. In the standardization process, the term SCG deactivation (SCG deactivation) is used to describe the state of SCG being activated/deactivated. SCG deactivation can be initiated due to terminal overheating (overheating) or for a power-saving purpose. Currently, discussions are underway regarding terminal behavior and network control methods during SCG deactivation. It can be determined that during SCG deactivation, the terminal does not monitor the physical downlink control channel (Physical Downlink Control Channel, PDCCH) on the SCG or transmit the physical uplink shared channel (Physical Uplink Shared Channel, PUSCH) or sounding reference signal (Sounding Reference Signal, SRS). For other terminal behaviors during SCG deactivation, some terminal behaviors are restricted to save terminal power, while some other terminal behaviors may continue to accelerate SCG activation for prompt data transmission.

However, there are currently at least two scenarios:
Scenario 1: The terminal has already triggered random access, while the network side sends an SCG deactivation command to the terminal.
Scenario 2: In the SCG deactivated state, when the terminal requests SCG activation, it can initiate random access on the SCG, so the terminal may have already initiated a random access on the SCG, while the network side sends configuration information to the terminal to trigger a new random access.

The foregoing two scenarios may cause the terminal to perform unnecessary random access, resulting in unnecessary power consumption; or, the terminal may perform unnecessary SCG deactivation operations, which does not meet the current requirements of the terminal for the SCG state.

### SUMMARY

Embodiments of this application provide a processing method and apparatus for random access and a terminal, which can solve the problem of unnecessary random access initiation or unnecessary SCG deactivation operations performed by a terminal.

According to a first aspect, a processing method for random access is provided, including:
performing, by a terminal, a first operation in a case that a first condition is satisfied, during a process of performing a first random access on a secondary cell group SCG by the terminal, where the first condition includes at least one of the following: the terminal initiates a second random access, the terminal receives first configuration information, and the terminal receives an SCG deactivation command, where the first configuration information is used for triggering bandwidth part BWP switching and/or a third random access; where
the first operation is one of the following:
   continuing performing the first random access; and
   stopping performing the first random access.

According to a second aspect, a processing apparatus for random access is provided, applied to a terminal, including:
a processing module configured to perform a first operation in a case that a first condition is satisfied, during a process of performing a first random access on a secondary cell group SCG, where the first condition includes at least one of the following: the terminal initiates a second random access, the terminal receives first configuration information, and the terminal receives an SCG deactivation command, where the first configuration information is used for triggering bandwidth part BWP switching and/or a third random access; where
the first operation is one of the following:
   continuing performing the first random access; and
   stopping performing the first random access.

According to a third aspect, a terminal is provided. The terminal includes a processor, a memory, and a program or instructions stored in the memory and capable of running on the processor, where when the program or instructions are executed by the processor, the steps of the method according to the first aspect are implemented.

According to a fourth aspect, a terminal is provided, including a processor and a communication interface. The communication interface is configured to initiate a second random access, receive first configuration information, or receive an SCG deactivation command; and the processor is configured to perform a first operation in a case that a first condition is satisfied, during a process of performing a first random access on a secondary cell group SCG by the terminal. The first condition includes at least one of the following: the terminal initiates the second random access, the terminal receives first configuration information, and the terminal receives the SCG deactivation command, where the first configuration information is used for triggering BWP switching and/or a third random access; where
the first operation is one of the following:
continuing performing the first random access; and
stopping performing the first random access.

According to a fifth aspect, a readable storage medium is provided, where the readable storage medium stores a program or instructions, and when the program or instructions are executed by a processor, the steps of the method according to the first aspect are implemented.

According to a sixth aspect, a chip is provided, where the chip includes a processor and a communication interface, the communication interface is coupled to the processor, and the processor is configured to run a program or instructions to implement the method according to the first aspect.

According to a seventh aspect, a computer program/program product is provided. The computer program/program product is stored in a non-volatile storage medium, and the program/program product is executed by at least one processor to implement steps of the method according to the first aspect.

In the embodiments of this application, during the process of performing the first random access on the secondary cell group SCG by the terminal, if the first condition is satisfied, the terminal continues performing the first random access or stops performing the first random access. This can avoid the terminal performing unnecessary random access that leads to increased power consumption and longer SCG activation delay; or avoid the terminal performing unnecessary SCG deactivation, meeting SCG activation/deactivation requirements of the terminal itself.

### BRIEF DESCRIPTION OF DRAWINGS

FIG. 1 shows a block diagram of a wireless communications system applicable to an embodiment of this application;
FIG. 2 shows a schematic diagram of steps of a processing method for random access according to an embodiment of this application;
FIG. 3 shows a schematic diagram of a structure of a processing apparatus for random access according to an embodiment of this application;
FIG. 4 is a first schematic diagram of a structure of a terminal according to an embodiment of this application; and
FIG. 5 is a second schematic diagram of a structure of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terminologies used in this way is interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, "and/or" in the specification and claims represents at least one of connected objects, and the character "/" generally indicates that the contextually associated objects have an "or" relationship.

It should be noted that the technology described in embodiments of this application is not limited to a long term evolution (Long Term Evolution, LTE)/LTE-advanced (LTE-Advanced, LTE-A) system, and may also be used in various wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably. The described technology may be used in the foregoing systems and radio technologies, or may be used in other systems and radio technologies. In the following descriptions, a new radio (New Radio, NR) system is described for an illustration purpose, and NR terms are used in most of the following descriptions. However, these technologies may also be applied to other applications than the NR system application, such as 6th Generation (6th Generation, 6G) communications systems.

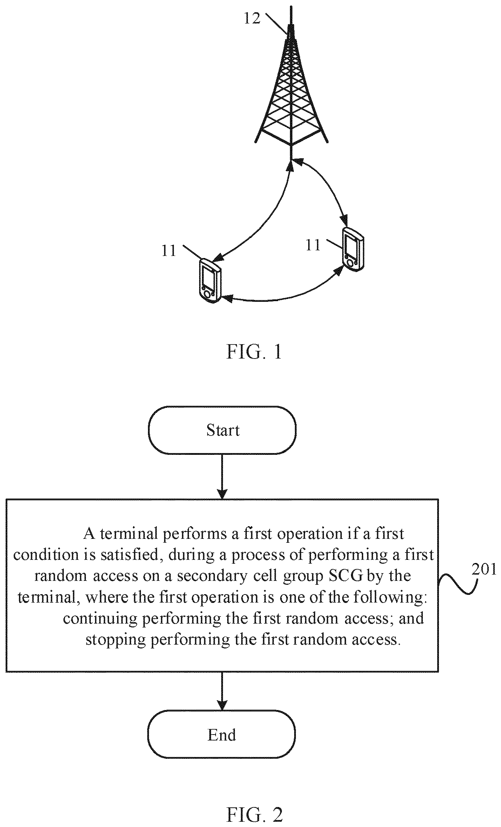

FIG. 1 shows a block diagram of a wireless communications system applicable to an embodiment of this application. The wireless communications system includes a terminal 11 and a network-side device 12. The terminal 11 may also be referred to as user equipment. The terminal 11 may be a terminal device such as a mobile phone, a tablet personal computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), a vehicle user equipment (Vehicle User Equipment, VUE), or a pedestrian user equipment (Pedestrian User Equipment, PUE). The wearable device includes: a smartwatch, a band, a headset, glasses, and the like. It should be noted that a specific type of the terminal 11 is not limited in the embodiments of this application. The network-side device 12 may be a base station or a core network. The base station may be referred to as a node B, an evolved Node B, an access point, a base transceiver station (Base Transceiver Station, BTS), a radio base station, a basic service set (Basic Service Set, BSS), an extended service set (Extended Service Set, ESS), a node B, an evolved node B (Evolved Node B eNB), a home node B, a home evolved node B, a WLAN (Wireless Local Area Network, WLAN) access point, a wireless fidelity (Wireless Fidelity, Wi-Fi) node, a transmission and reception point (Transmitting Receiving Point, TRP), or another suitable term in the field. Provided that a same technical effect is achieved, the base station is not limited to a specific technical word. It should be noted that in the embodiments of this application, only the base station in an NR system is used as an example, although the specific type of the base station is not limited.

The following describes the processing method and apparatus for random access and the terminal provided in the embodiments of this application through some embodiments and application scenarios thereof, with reference to the accompanying drawings.

As shown in FIG. 2, this application provides a processing method for random access, including:

Step 101: A terminal performs a first operation in a case that a first condition is satisfied, during a process of performing a first random access on a secondary cell group SCG by the terminal, where the first condition includes at least one of the following: the terminal initiates a second random access, the terminal receives first configuration information, and the terminal receives an SCG deactivation command, where the first configuration information is used for triggering bandwidth part BWP switching and/or a third random access; where
the first operation is one of the following:
continuing performing the first random access; and
stopping performing the first random access.

In the embodiments of this application, whether the terminal continues or stops performing the first random access in the case that the first condition is satisfied can be determined by network configuration or a preset condition. Relevant conditions can be set by the network, defined by a protocol, or prearranged between the terminal and the network, which is not specifically limited herein.

It should be noted that when the terminal is performing the first random access on the SCG, the SCG can be in activated state or deactivated state, which is not specifically limited herein. For example, the SCG is in activated state, and the terminal initiates the first random access in a primary secondary cell PSCell or a SCG secondary cell. For another example, the SCG is in deactivated state, there is uplink data arriving at the SCG, and the terminal requests activation of the SCG, and the terminal initiates the first random access on the PSCell.

In at least one embodiment of this application, in a case of the first condition being that the terminal initiates a second random access,
at least one of the first random access and the second random access is triggered when the SCG is in deactivated state.

For example, if the first random access is triggered when the SCG is in activated state, a second random access can be triggered when the SCG is in activated state. If the first random access is triggered when the SCG is in deactivated state, the second random access can also be triggered when the SCG is in deactivated state.

As an optional embodiment of this application, in step 201, during the process of performing the first random access on the secondary cell group SCG by the terminal, in a case that the terminal initiates the second random access, the terminal stops performing the first random access, including:
the terminal stops performing the first random access in a case that a second condition is satisfied, if the second random access is triggered by execution of a conditional primary secondary cell change (Conditional PSCell Change, CPC); and optionally, after stopping performing the first random access, the terminal can continue performing the second random access.

The second condition includes at least one of the following:
the first random access is triggered by uplink data arrival at the SCG when the SCG is in deactivated state;
the first random access is triggered by uplink data arrival at the SCG and the SCG being not uplink synchronized when the SCG is in deactivated state;
the first random access is triggered by uplink data arrival at the SCG and the terminal not having uplink resources for sending scheduling requests (scheduling request, SR) in the case that the SCG is in deactivated state; and
the first random access is triggered by beam failure recovery (Beam Failure Recovery, BFR).

In one embodiment, when the SCG is in deactivated state, the terminal initiates the first random access on the SCG due to the arrival of uplink data, requesting the activation of the SCG. During this process, the terminal continuously evaluates and executes conditional PSCell change, triggering the second random access when a condition for performing CPC is met. Because the execution of CPC results in the terminal being handed over to a new target PSCell, there is no need for the terminal to initiate random access on the original source PSCell. Therefore, the terminal stops performing the first random access and initiates the second random access.

As an optional embodiment of this application, in step 201, during the process of performing the first random access on the secondary cell group SCG by the terminal, if the terminal receives an SCG deactivation command, the terminal performs the first operation, including:
the terminal performs the first operation in a case that a third condition is satisfied, where the third condition includes at least one of the following:
the first random access is triggered by uplink data arrival at the SCG when the SCG and the terminal not uplink synchronized;
the first random access is triggered by uplink data arrival at the SCG and the terminal having no uplink resource for SR transmission;
the first random access is triggered by a request of the terminal for activation of the SCG;
the first random access is triggered by SR failure on the SCG;
the first random access is triggered by BFR;
the first random access is triggered by a CPC being executed; and
the first random access is triggered by establishment of time alignment (Time Alignment, TA) for a secondary timing advance group (secondary Timing Advance Group, sTAG).

It should be noted that "during the process of performing the first random access on the secondary cell group SCG by the terminal, if the terminal receives the SCG deactivation command" at least includes:
the SCG is in activated state, and the terminal receives the SCG deactivation command during the process of performing the first random access on the SCG by the terminal; or
the SCG is in deactivated state, and the terminal receives the SCG deactivation command during the process of performing the first random access on the SCG by the terminal. For example, the terminal has undergone a handover without PSCell change (handover without PSCell change) and the target master node decides to keep the SCG in deactivated state, and then the target master node sends the SCG deactivation command to the terminal.

As an optional embodiment, the terminal continues performing the first random access in a case that the third condition includes at least one of the following:
the first random access is triggered by a request of the terminal for activation of the SCG;
the first random access is triggered by SR failure on the SCG;
the first random access is triggered by uplink data arrival at the SCG when the SCG and the terminal not uplink synchronized and
the first random access is triggered by uplink data arrival at the SCG and the terminal having no uplink resource for SR transmission.

As another optional embodiment, the terminal stops performing the first random access in a case that the third condition includes at least one of the following:
the first random access is triggered by BFR;
the first random access is triggered by a CPC being executed; and
the first random access is triggered by establishment of TA for an sTAG.

As another optional embodiment, if the third condition is triggered when the SCG is in activated state, the terminal continues performing the first random access. If the third condition is triggered in the case that the SCG is in deactivated state, the terminal stops performing the first random access.

For example, when the SCG is in activated state, the terminal has uplink data to send. In the absence of available physical uplink control channel (Physical Uplink Control Channel, PUCCH)/PUSCH resources, the terminal needs to initiate random access to request uplink transmission resources. During this process, the network-side may possibly send an SCG deactivation command to the terminal due to resource constraints. Therefore, the terminal can stop initiating random access to avoid the network-side sending the SCG deactivation command after random access initiation.

For another example, when the SCG is in deactivated state, the terminal initiates random access on the SCG due to the arrival of uplink data. During this process, the terminal undergoes a handover. Because the target master and secondary base stations are unaware of whether the terminal has uplink data to send, the target master base station may possibly send an SCG deactivation command to the terminal to keep the SCG in deactivated state. Therefore, the terminal can continue to initiate random access to notify the network-side terminal that there is uplink data to be transmitted.

For another example, if CPC execution is triggered when the SCG is in activated state, the terminal initiates random access. Such random access may be initiated on dedicated random access resources configured for the UE by the target PSCell. If the terminal receives an SCG deactivation command during this random access, the terminal should complete the first random access in priority, and optionally deactivate the SCG, or keep the SCG activated and wait for the target PSCell to determine whether to deactivate the SCG.

In another example, if CPC execution is triggered when the SCG is in deactivated state, the terminal initiates random access. Such random access may be contention-based random access, which is random access not initiated on dedicated random access resources. In this case, the terminal may not initiate random access immediately but wait until the SCG is activated before initiating random access.

In at least one optional embodiment of this application, in a case of the first condition being that the terminal receives an SCG deactivation command,
if the first operation is continuing performing the first random access, the method further includes:
the terminal ignores the SCG deactivation command or deactivates the SCG after the first random access is completed; or
if the first operation is stopping performing the first random access, the method further includes:
   the terminal deactivates the SCG according to the SCG deactivation command.

As at least one optional embodiment of this application, in step 201, during the process of performing the first random access on the secondary cell group SCG by the terminal, if the terminal receives the first configuration information, the terminal stops performing the first random access, including:
the terminal stops performing the first random access in a case that a fourth condition is satisfied; where
the fourth condition includes at least one of the following:
   the first configuration information includes dedicated random access resources;
   the first configuration information triggers a primary secondary cell change (PSCell change); and
   the first configuration information triggers SCG activation.

That terminal receives the first configuration information includes:
the terminal receives the first configuration information in a case that the SCG is in deactivated state.

As an optional embodiment of this application, during the process of performing the first random access on the secondary cell group SCG by the terminal, if the terminal receives the first configuration information, after the terminal stops performing the first random access, the method further includes at least one of the following:
the terminal performs BWP switching based on the first configuration information;
the terminal initiates a third random access based on the first configuration information; and
the terminal performs BWP switching based on the first configuration information and initiates a random access on the switched-to BWP.

As another optional embodiment of this application, during the process of performing the first random access on the secondary cell group SCG by the terminal, if the terminal receives the first configuration information, after the terminal continues performing the first random access, the method further includes:
skip the BWP switching; or,
performing the BWP switching after the first random access is completed.

In the embodiments of this application, during the process of performing the first random access on the secondary cell group SCG by the terminal, if the first condition is satisfied, the terminal continues performing the first random access or stops performing the first random access. This can avoid the terminal performing unnecessary random access that leads to increased power consumption and longer SCG activation delay; or avoid the terminal performing unnecessary SCG deactivation, meeting SCG activation/deactivation requirements of the terminal itself.

In order to illustrate the processing method for random access provided in this embodiment more clearly, several examples are described below.

Example 1: The SCG is activated, the terminal has an ongoing first random access on the SCG and receives an SCG deactivation command.

Step s1: With the SCG in activated state, the terminal initiates the first random access on a PSCell or an SCell of the SCG.

Step s2: When the first random access is being performed, the terminal receives the SCG deactivation command and performs one of the following operations:

A1: Continue with the first random access being performed. Optionally, the terminal ignores the SCG deactivation command. Optionally, the terminal performs the operation in a case that the following conditions are met, where the conditions include:
the first random access is triggered by a request of the terminal for activation of the SCG;
the first random access is triggered by SR failure on the SCG;
the first random access is triggered by uplink data arrival at the SCG when the SCG and the terminal not uplink synchronized; or
the first random access is triggered by uplink data arrival at the SCG and the terminal having no uplink resource for SR transmission.

B 1: Stop the first random access being performed. Optionally, the terminal performs the operation in a case that the following conditions are met, where the conditions include:
the first random access is triggered by BFR;
the first random access is triggered by a CPC being executed; or
the first random access is triggered by establishment of time alignment TA for a secondary timing advance group sTAG.

Example 2: The SCG is deactivated, the terminal has an ongoing first random access on the SCG and receives first configuration information, where the first configuration information triggers BWP switching and/or a new random access (a third random access).

Step s1: With the SCG in deactivated state, the terminal initiates the first random access on the PSCell. For example, when uplink data arrives at the SCG, the terminal requests SCG activation.

Step s2: When the first random access is being performed, the terminal receives the first configuration information sent by the network side, the first configuration information having triggered BWP switching or a new random access on the PSCell (for example, when downlink data arrives at the SCG, the network side activates the SCG and configures random access channel (Random Access Channel, RACH) resources and/or suitable BWP for the terminal), and the terminal performs one of the following operations:

A2: Stop the first random access being performed. Further, the terminal performs BWP switching or initiate a new random access based on the first configuration information. Optionally, the terminal initiates random access on the switched-to BWP after BWP switching is completed. Optionally, the terminal stops the first random access being performed only when at least one of the following conditions is met:
the first configuration information includes dedicated RACH resources; and
the first configuration information triggers a PSCell change.

B2: Continue with the first random access being performed. Optionally, the terminal proceeds without performing BWP switching or performs BWP switching after the random access is completed.

Example 3: The SCG is activated, the terminal has an ongoing first random access on the SCG, and the terminal receives an SCG deactivation command

Step s1: With the SCG in deactivated state, the terminal initiates the first random access on the PSCell. For example, when uplink data arrives at the SCG, the terminal requests SCG activation.

Step s2: When the first random access is being performed, the terminal receives the SCG deactivation command (for example, the terminal has undergone a handover without PSCell change, and the target master node decides to keep the SCG in deactivated state), and the terminal performs one of the following operations:

A3: Stop the first random access being performed. Further, the terminal executes the SCG deactivation command to deactivate the SCG.

B3: Continue with the first random access being performed. Optionally, the terminal ignores the SCG deactivation command or deactivates the SCG after the first random access is completed.

It should be noted that in the embodiments of this application, the processing method for random access can be performed by a processing apparatus for random access or a control module within the processing apparatus configured to perform the processing method for random access. In the embodiments of this application, the processing apparatus for random access performing the processing method for random access is used as an example to illustrate the processing apparatus for random apparatus provided in the embodiments of this application.

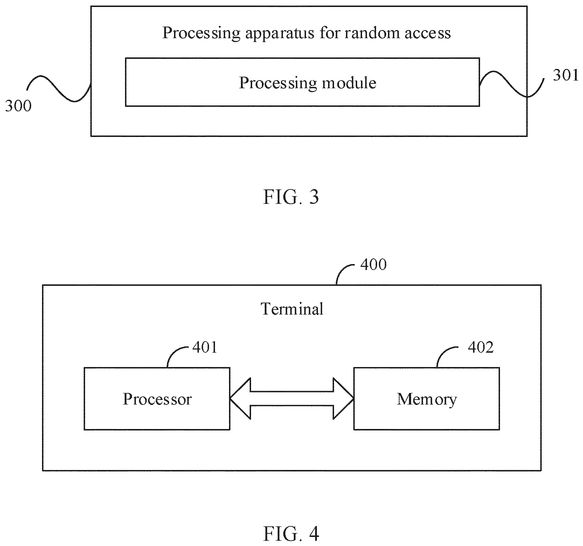

As shown in FIG. 3, the embodiments of this application further provide a processing apparatus 300 for random access, applied to a terminal, including:
a processing module 301 configured to perform a first operation in a case that a first condition is satisfied, during a process of performing a first random access on a secondary cell group SCG, where the first condition includes at least one of the following: the terminal initiates a second random access, the terminal receives first configuration information, and the terminal receives an SCG deactivation command, where the first configuration information is used for triggering bandwidth part BWP switching and/or a third random access; where
the first operation is one of the following:
   continuing performing the first random access; and
   stopping performing the first random access.

As an optional embodiment, the apparatus 300 further includes at least one of the following:
a random access initiation module used for initiating the second random access; and
a receiving module used for receiving the first configuration information or the SCG deactivation command.

As an optional embodiment, in a case of the first condition being that the terminal initiates a second random access,
at least one of the first random access and the second random access is triggered when the SCG is in deactivated state.

As an optional embodiment, the processing module includes:
a first stop submodule configured to stop performing the first random access in a case that a second condition is satisfied, if the second random access is triggered by execution of a conditional primary secondary cell change CPC.

The second condition includes at least one of the following:
the first random access is triggered by uplink data arrival at the SCG when the SCG is in deactivated state;
the first random access is triggered by uplink data arrival at the SCG and the SCG being not uplink synchronized when the SCG is in deactivated state;
the first random access is triggered by uplink data arrival at the SCG and the terminal having no uplink resource for scheduling request SR transmission when the SCG is in deactivated state; and
the first random access is triggered by beam failure recovery BFR.

As an optional embodiment, the processing module includes:
a first processing submodule configured to perform the first operation in a case that a third condition is satisfied, where the third condition includes at least one of the following:
the first random access is triggered by uplink data arrival at the SCG when the SCG and the terminal not uplink synchronized;
the first random access is triggered by uplink data arrival at the SCG and the terminal having no uplink resource for SR transmission;
the first random access is triggered by a request of the terminal for activation of the SCG;
the first random access is triggered by SR failure on the SCG;
the first random access is triggered by BFR;
the first random access is triggered by a CPC being executed; and
the first random access is triggered by establishment of TA for a secondary timing advance group sTAG.

As an optional embodiment of this application, in a case of the first condition being that the terminal receives an SCG deactivation command,
the apparatus further includes:
a first ignore module configured to ignore the SCG deactivation command if the first operation is continuing performing the first random access, or, the terminal deactivates the SCG after the first random access is completed;
and/or, a deactivation module configured to deactivate the SCG according to the SCG deactivation command if the first operation is stopping performing the first random access.

As an optional embodiment, the processing module includes:
a second stop submodule, configured to stop performing the first random access in a case that a fourth condition is satisfied; where
the fourth condition includes at least one of the following:
   the first configuration information includes dedicated random access resources;
   the first configuration information triggers a primary secondary cell change; and
   the first configuration information triggers SCG activation.

As an optional embodiment, the processing module is further configured to:
receive the first configuration information in a case that the SCG is in deactivated state.

As an optional embodiment, the apparatus further includes at least one of the following:
a first switching module configured to perform BWP switching based on the first configuration information;
a first random access module configured to initiate a third random access based on the first configuration information; and
a second random access module configured to perform BWP switching based on the first configuration information and initiate random access on the switched-to BWP.

As an optional embodiment, the apparatus further includes:
a second ignore module configured to skip the BWP switching; and/or
a second switching module configured to perform the BWP switching after the first random access is completed.

In the embodiments of this application, during the process of performing the first random access on the secondary cell group SCG by the terminal, if the first condition is satisfied, the terminal continues performing the first random access or stops performing the first random access. This can avoid the terminal performing unnecessary random access that leads to increased power consumption and longer SCG activation delay; or avoid the terminal performing unnecessary SCG deactivation, meeting SCG activation/deactivation requirements of the terminal itself.

It should be noted that the processing apparatus for random access provided in this embodiment of this application is capable of performing the processing method for random access described above. Therefore, all embodiments of the processing method for random access are applicable to the apparatus and can achieve same or similar beneficial effects.

The processing apparatus for random access in this embodiment of this application may be an apparatus or an apparatus or electronic device having an operating system, or may be a component, an integrated circuit, or a chip in a terminal. The apparatus or electronic device may be a mobile terminal or a non-mobile terminal. For example, the mobile terminal may include but is not limited to the type of the terminal 11 listed above. The non-mobile terminal may be a server, a network attached storage (Network Attached Storage, NAS), a personal computer (personal computer, PC), a television (television, TV), a teller machine, or a self-service computer. This is not specifically limited in this embodiment of this application.

The processing apparatus for random access provided in this embodiment of this application is capable of implementing the processes implemented in the method embodiments in FIG. 2, with the same technical effects achieved. To avoid repetition, details are not described herein again.

Optionally, as shown in FIG. 4, an embodiment of this application further provides a terminal 400, including a processor 401, a memory 402, and a program or instructions stored in the memory 402 and capable of running on the processor 401. When the program or instructions are executed by the processor 401, the processes of the foregoing embodiments of the processing method for random access are implemented, and a same technical effect can be achieved. To avoid repetition, details are not described herein again.

The embodiments of this application further provide a terminal including a processor and a communication interface. The communication interface is used to initiate a second random access, receive first configuration information, or receive an SCG deactivation command; and the processor is configured to perform a first operation in a case that a first condition is satisfied, during a process of performing a first random access on a secondary cell group SCG by the terminal. The first condition includes at least one of the following: the terminal initiates the second random access, the terminal receives the first configuration information, and the terminal receives the SCG deactivation command. The first configuration information is used for triggering bandwidth part BWP switching and/or a third random access.

The first operation is one of the following:
continuing performing the first random access; and
stopping performing the first random access.

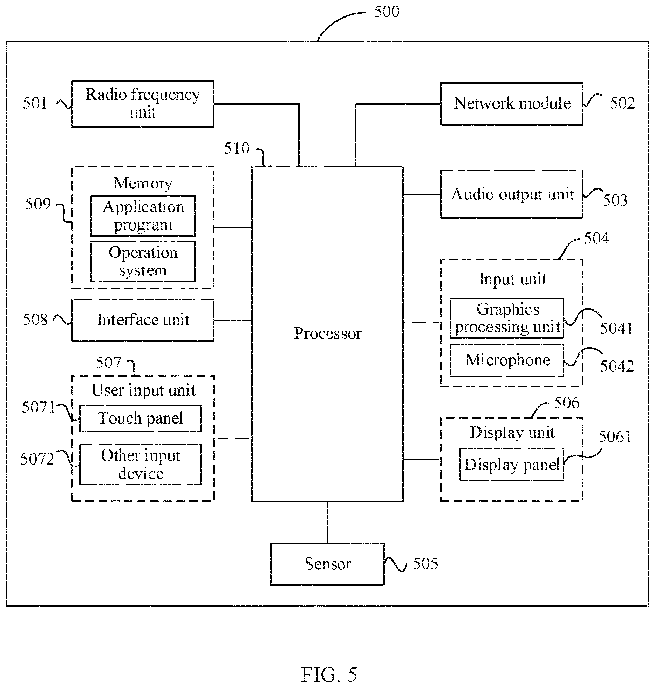

It should be noted that the terminal embodiment is corresponding to the method embodiment on the terminal side. All implementation processes and implementations of the foregoing method embodiment are applicable to the terminal embodiment, with the same technical effect achieved. Specifically, FIG. 5 is a schematic diagram of a hardware structure of a terminal implementing an embodiment of this application.

The terminal 500 includes but is not limited to at least some of components such as a radio frequency unit 501, a network module 502, an audio output unit 503, an input unit 504, a sensor 505, a display unit 506, a user input unit 507, an interface unit 508, a memory 509, and a processor 510.

It can be understood by those skilled in the art that the terminal 500 may further include a power supply (for example, a battery) supplying power to the components. The power supply may be logically connected to the processor 510 via a power management system, so that functions such as charge management, discharge management, and power consumption management are implemented by using the power management system. The structure of the terminal shown in FIG. 5 does not constitute any limitation on the terminal, and the terminal may include more or fewer components than shown in the figure, or combine some of the components, or have different arrangements of the components. Details are not described herein.

It should be understood that in this embodiment of this application, the input unit 504 may include a graphics processing unit (Graphics Processing Unit, GPU) 5041 and a microphone 5042. The graphics processing unit 5041 processes image data of a static picture or a video that is obtained by an image capture apparatus (for example, a camera) in a video capture mode or an image capture mode. The display unit 506 may include a display panel 5061. The display panel 5061 may be configured in a form of a liquid crystal display, an organic light-emitting diode display, or the like. The user input unit 507 includes a touch panel 5071 and other input devices 5072. The touch panel 5071 is also referred to as a touchscreen. The touch panel 5071 may include two parts: a touch detection apparatus and a touch controller. The other input devices 5072 may include but are not limited to a physical keyboard, a functional button (such as a volume control button or a power on/off button), a trackball, a mouse, and a joystick. Details are not described herein.

In this embodiment of this application, after receiving downlink data from a network-side device, the radio frequency unit 501 sends the downlink data to the processor 510 for processing, and in addition, sends uplink data to the network-side device. Generally, the radio frequency unit 501 includes but is not limited to an antenna, at least one amplifier, a transceiver, a coupler, a low noise amplifier, and a duplexer.

The memory 509 may be configured to store software programs or instructions and various data. The memory 509 may include a program or instruction storage area and a data storage area. The program or instruction storage area may store an operating system, an application program or instruction required by at least one function (for example, a sound playback function or an image playback function), and the like. In addition, the memory 509 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other volatile solid-state storage device.

The processor 510 may include one or more processing units. Optionally, an application processor and a modem processor may be integrated in the processor 510. The application processor primarily processes an operating system, user interfaces, application programs or instructions, and the like. The modem processor primarily processes radio communication, for example, being a baseband processor. It can be understood that the modem processor may alternatively be not integrated in the processor 510.

The radio frequency unit 501 is configured to receive first configuration information or receive SCG deactivation command; and the processor 510 is configured to initiate a second random access;
the processor 510 is further configured to perform a first operation in a case that a first condition is satisfied, during a process of performing a first random access on a secondary cell group SCG, where the first operation is one of the following:
continuing performing the first random access; and
stopping performing the first random access; where
the first condition includes at least one of the following: the terminal initiates a second random access, the terminal receives first configuration information, and the terminal receives an SCG deactivation command, where the first configuration information is used for triggering bandwidth part BWP switching and/or a third random access.

In the embodiments of this application, during the process of performing the first random access on the secondary cell group SCG by the terminal, if the first condition is satisfied, the terminal continues performing the first random access or stops performing the first random access. This can avoid the terminal performing unnecessary random access that leads to increased power consumption and longer SCG activation delay; or avoid the terminal performing unnecessary SCG deactivation, meeting SCG activation/deactivation requirements of the terminal itself.

It should be noted that the terminal provided in this embodiment of this application is a terminal capable of performing the processing method for random access described above. Therefore, all embodiments of the processing method for random access are applicable to the terminal and can achieve same or similar beneficial effects.

An embodiment of this application further provides a readable storage medium, where the readable storage medium may be non-volatile or volatile. The readable storage medium stores a program or instructions, and when the program or instructions are executed by a processor, the processes of the foregoing embodiments of the processing method for random access are implemented, with the same technical effects achieved. To avoid repetition, details are not described herein again.

The processor is a processor in the terminal described in the foregoing embodiment. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions to implement processes in the foregoing embodiments of the processing method for random access, and a same technical effect can be achieved. To avoid repetition, details are not described herein again.

It should be understood that the chip mentioned in this embodiment of this application may also be referred to as a system-level chip, a system chip, a chip system, a system-on-chip, or the like.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

From the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a computer software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A processing method for random access, comprising:
performing, by a terminal, a first operation in a case that a first condition is satisfied, during a process of performing a first random access on a secondary cell group SCG by the terminal, wherein the first condition comprises at least one of the following: the terminal initiates a second random access, the terminal receives first configuration information, and the terminal receives an SCG deactivation command, wherein the first configuration information is used for triggering bandwidth part BWP switching and/or a third random access; wherein
the first operation is one of the following:
continuing performing the first random access; and
stopping performing the first random access.

2. The method according to claim 1, wherein in a case of the first condition being that the terminal initiates a second random access,
at least one of the first random access and the second random access is triggered when the SCG is in deactivated state.

3. The method according to claim 1 or 2, wherein during the process of performing the first random access on the secondary cell group SCG, in a case that the terminal initiates the second random access, the terminal stops performing the first random access, comprising:
stopping, by the terminal, performing the first random access in a case that a second condition is satisfied, if the second random access is triggered by a conditional primary secondary cell change CPC being executed; wherein
the second condition comprises at least one of the following:
the first random access is triggered by uplink data arrival at the SCG when the SCG is in deactivated state;
the first random access is triggered by uplink data arrival at the SCG and the SCG being not uplink synchronized when the SCG is in deactivated state;
the first random access is triggered by uplink data arrival at the SCG and the terminal having no uplink resource for scheduling request SR transmission when the SCG is in deactivated state; and
the first random access is triggered by beam failure recovery BFR.

4. The method according to claim 1, wherein during the process of performing the first random access on the secondary cell group SCG, if the terminal receives an SCG deactivation command, the terminal performs the first operation, comprising:
performing, by the terminal, the first operation in a case that a third condition is satisfied, wherein the third condition comprises at least one of the following:
the first random access is triggered by uplink data arrival at the SCG when the SCG and the terminal not uplink synchronized;
the first random access is triggered by uplink data arrival at the SCG and the terminal having no uplink resource for SR transmission;
the first random access is triggered by a request of the terminal for activation of the SCG;
the first random access is triggered by SR failure on the SCG;
the first random access is triggered by BFR;
the first random access is triggered by a CPC being executed; and
the first random access is triggered by establishment of time alignment TA for a secondary timing advance group sTAG.

5. The method according to claim 1 or 4, wherein in a case of the first condition being that the terminal receives an SCG deactivation command,
if the first operation is continuing performing the first random access, the method further comprises:
the terminal ignores the SCG deactivation command or deactivates the SCG after the first random access is completed; or
if the first operation is stopping performing the first random access, the method further comprises:
the terminal deactivates the SCG according to the SCG deactivation command.

6. The method according to claim 1, wherein during the process of performing the first random access on the secondary cell group SCG, if the terminal receives the first configuration information, the terminal stops performing the first random access, comprising:
stopping performing, by the terminal, the first random access in a case that a fourth condition is satisfied; wherein
the fourth condition comprises at least one of the following:
the first configuration information comprises dedicated random access resources;
the first configuration information triggers a primary secondary cell change; and
the first configuration information triggers SCG activation.

7. The method according to claim 6, wherein that the terminal receives the first configuration information comprises:
receiving, by the terminal, the first configuration information in a case that the SCG is in deactivated state.

8. The method according to claim 1 or 6, wherein during the process of performing the first random access on the secondary cell group SCG, if the terminal receives the first configuration information, after the terminal stops performing the first random access, the method further comprises at least one of the following:
performing, by the terminal, BWP switching based on the first configuration information;
initiating, by the terminal, a third random access based on the first configuration information; and
performing, by the terminal, BWP switching based on the first configuration information and initiating, by the terminal, a random access on the switched-to BWP.

9. The method according to claim 1, wherein during the process of performing the first random access on the secondary cell group SCG, if the terminal receives the first configuration information, after the terminal continues performing the first random access, the method further comprises:
skipping the BWP switching; or,
performing the BWP switching after the first random access is completed.

10. A processing apparatus for random access, applied to a terminal, comprising:
a processing module configured to perform a first operation in a case that a first condition is satisfied, during a process of performing a first random access on a secondary cell group SCG, wherein the first condition comprises at least one of the following: the terminal initiates a second random access, the terminal receives first configuration information, and the terminal receives an SCG deactivation command, wherein the first configuration information is used for triggering bandwidth part BWP switching and/or a third random access; wherein
the first operation is one of the following:
continuing performing the first random access; and
stopping performing the first random access.

11. The apparatus according to claim 10, wherein in a case of the first condition being that the terminal initiates a second random access,
at least one of the first random access and the second random access is triggered when the SCG is in deactivated state.

12. The apparatus according to claim 10 or 11, wherein the processing module comprises:
a first stop submodule configured to stop performing the first random access in a case that a second condition is satisfied, if the second random access is triggered by a conditional primary secondary cell change CPC being executed; wherein
the second condition comprises at least one of the following:
the first random access is triggered by uplink data arrival at the SCG when the SCG is in deactivated state;
the first random access is triggered by uplink data arrival at the SCG and the SCG being not uplink synchronized when the SCG is in deactivated state;
the first random access is triggered by uplink data arrival at the SCG and the terminal having no uplink resource for scheduling request SR transmission when the SCG is in deactivated state; and
the first random access is triggered by beam failure recovery BFR.

13. The apparatus according to claim 10, wherein the processing module comprises:
a first processing submodule configured to perform the first operation in a case that a third condition is satisfied, wherein the third condition comprises at least one of the following:
the first random access is triggered by uplink data arrival at the SCG when the SCG and the terminal not uplink synchronized
the first random access is triggered by uplink data arrival at the SCG and the terminal having no uplink resource for SR transmission;
the first random access is triggered by a request of the terminal for activation of the SCG;
the first random access is triggered by SR failure on the SCG;
the first random access is triggered by BFR;
the first random access is triggered by a CPC being executed; and
the first random access is triggered by establishment of TA for a secondary timing advance group sTAG.

14. The apparatus according to claim 10 or 13, wherein in a case of the first condition being that the terminal receives an SCG deactivation command,
the apparatus further comprises:
a first ignore module configured to ignore the SCG deactivation command if the first operation is continuing performing the first random access, or, the terminal deactivates the SCG after the first random access is completed; and/or
a deactivation module configured to deactivate the SCG according to the SCG deactivation command if the first operation is stopping performing the first random access.

15. The apparatus according to claim 10, wherein the processing module comprises:
a second stop submodule, configured to stop performing the first random access in a case that a fourth condition is satisfied; wherein
the fourth condition comprises at least one of the following:
the first configuration information comprises dedicated random access resources;
the first configuration information triggers a primary secondary cell change; and
the first configuration information triggers SCG activation.

16. The apparatus according to claim 15, wherein the processing module is further configured to:
receive the first configuration information in a case that the SCG is in deactivated state.

17. The apparatus according to claim 10 or 15, wherein the apparatus further comprises at least one of the following:
a first switching module configured to perform BWP switching based on the first configuration information;
a first random access module configured to initiate a third random access based on the first configuration information; and
a second random access module configured to perform BWP switching based on the first configuration information and initiate random access on the switched-to BWP.

18. The apparatus according to claim 10, wherein the apparatus further comprises:
a second ignore module configured to skip the BWP switching; and/or
a second switching module configured to perform the BWP switching after the first random access is completed.

19. A terminal, comprising a processor, a memory, and a program or instructions stored in the memory and capable of running on the processor, wherein when the program or instructions are executed, the steps of the processing method for random access according to any one of claims 1 to 9 are implemented.

20. A readable storage medium, wherein the readable storage medium stores a program or instructions, and when the program or instructions are executed by a processor, the steps of the processing method for random access according to any one of claims 1 to 9 are implemented.
